# EUROPEAN PATENT APPLICATION

(11) **EP 2 703 219 A1**
(43) Date of publication of application: **05.03.2014**
(21) Application number: 12182822.2
(22) Date of filing: 03.09.2012
(51) Int. Cl.: B60Q 1/48

(54) **Remote control system for bicycle finding**

(71) Applicant: Direction Technology Co., Ltd., New Taipei City 241 (TW)
(72) Inventor: Chen, Yi-Lun, 241 New Taipei City (TW)
(74) Representative: Karakatsanis, Georgios

(57) **Abstract**

A remote control system (1) for bicycle finding includes a bicycle finder (11) and a receiver unit (12). The bicycle finder (11) includes an input unit (111), an automatic continuous signal transmission unit (112), a first wireless signal amplification circuit (113), an encoder (114), and a wireless transmitter (115). The receiver unit (12) includes a timed activation unit (121), a wireless receiver (122), a decoder (123), a second wireless signal amplification circuit (124), and an indication unit (125). A user operates the input unit (111) to transmit an instruction signal (S0) to the automatic continuous signal transmission unit (112) in order to issue a continuous signal (S1) of fixed time duration (T2) to the first wireless signal amplification circuit (113) to be transmitted out. The timed activation unit (121) of the receiver unit (12) activates the wireless receiver (122) at an activation period (T0) that is shorter than the fixed time duration (T2) in order to receive the continuous signal (S1).

## Description

### BACKGROUND OF THE INVENTION

### 1. Field of the Invention

The present invention relates to the design of vehicle finding module, and in particular to a bicycle cal adapter with a vehicle finding modle for finding a bicycle.

### 2. The Related Arts

The increasing concern of modern people about leisure and recreation makes bicycle one of the primary options for holiday recreational activities. Also, there are more and more people using bicycle as a measure of transportation to work and school in weekdays.

To provide easy way of bicycle parking, most of sight-seeing spots, government agencies, and academic facilities provide parking spaces dedicated to bicycle parking. Since generally bicycles are not required to carry a tag in the same way as a motor vehicles. Thus, in seeking for his or her own bicycle, a bicycle owner often has to spend a lot of time in identifying his or her own bicycle among a great number of bicycles having similar appearances.

In view of this problem, to make bicycle finding easy for bicycle owner and also to shorten the time that the bicycle owner has to spend in finding his or her bicycle, some bicycle manufacturers add a receiver device on the bicycle. When a bicycle owner is attempting to locate his or her bicycle, the bicycle owner may operate a bicycle finding device that is generally carried by the owner to make the receiver device that is mounted to the bicycle to carry out a predetermined operation according to the received instruction. In this way, the trouble that the bicycle owner, when looking for his or her bicycle, is confused by a great number of similar bicycles that are located around his or her bicycle can be overcome.

To allow the receiver device to respond immediately, the receiver device must be set in a standby state in a whole day so as to timely receive a bicycle finding signal transmitted from the bicycle finding device. If the receiver device cannot be kept in the standby condition all the time, then it is possible that the receiver device cannot timely receive the bicycle finding signal transmitted from the bicycle finding device and consequently, installation of these devices becomes in vain.

However, keeping the receiver device in the standby condition all the time would lead to a great consumption of electrical power. For the consideration of overall weight of the entire bicycle, the accessory devices of a bicycle are often powered by electrical cells. Consequently, the electrical cells may be last at most for one week or so if the receiver device is kept in the standby condition all the time. This makes the use of such devices very inconvenient.

Further, a conventional bicycle finding device is only effective for a short range (around 1-2 meters). To find bicycle in a longer range (such as 20-30 meters), the receiver device that corresponds to the bicycle finding device must be of extremely high sensitivity and consequently, the consumption of electrical power is greatly increased. The commonly used low power electrical cells may not be capable to support such a great power consumption.

Thus, it will be challenge in the future for bicycle manufacturers to provide a novel bicycle finding device under such a condition that only the regular small power electrical cells are used in the bicycle.

### SUMMARY OF THE INVENTION

In view of the above discussed, the present invention aims to provide a remote control system for bicycle finding, which overcomes the problem that a receiver device mounted in a bicycle must be kept in a standby condition all the time and thus consumes electrical power from an electrical cell.

To achieve the above object, the present invention provides a remote control system for bicycle finding, which comprises a bicycle finder comprising an input unit, an automatic continuous signal transmission unit, a first wireless signal amplification circuit, an encoder, and a wireless transmitter; a receiver unit comprising a timed activation unit, a wireless receiver, a decoder, a second wireless signal amplification circuit, and an indication unit, wherein the input unit is operated by a user to transmit an instruction signal to the automatic continuous signal transmission unit. The automatic continuous signal transmission unit, after receiving the instruction signal, issues a continuous signal of fixed time duration to the first wireless signal amplification circuit, so that the continuous signal is transmitted out through the encoder and the wireless transmitter. The timed activation unit of the receiver unit activates the wireless receiver at an activation period that is shorter than the fixed time duration in order to receive the continuous signal.

Preferably, the input unit is electrically connected to the automatic continuous signal transmission unit. The automatic continuous signal transmission unit is electrically connected to the first wireless signal amplification circuit. The first wireless signal amplification circuit is electrically connected to the encoder. The encoder is electrically connected to the wireless transmitter. The timed activation unit is electrically connected to the wireless receiver. The wireless receiver is electrically connected to the decoder. The decoder is electrically connected to the second wireless signal amplification circuit. The second wireless signal amplification circuit is electrically connected to the indication unit.

The bicycle finder according to the present invention may comprise an indication light, which is electrically connected to the input unit. The input unit may comprise physical pushbuttons or a touch screen to receive instruction supplied from a user. The indication unit of the receiver unit may comprise an LED light, which may get flashing to inform the user of the position of the bicycle when the wireless receiver receives the continuous signal. The receiver unit can be mounted to any selected site on a bicycle, such as headlight or bicycle lock. The bicycle finder can be combined with a key to form a unitary structure or can be attached to a handlebar of the bicycle after use.

The remote control system of bicycle finding according to the present invention makes use of time division principle to allow the receiver unit to be activated according to a fixed activation period in order to search for a bicycle finding signal.

### BRIEF DESCRIPTION OF THE DRAWINGS

The present invention will be apparent to those skilled in the art by reading the following description of a preferred embodiment of the present invention, with reference to the attached drawings, in which:
Figure 1 is a schematic view illustrating the operation of a preferred embodiment of the present invention;
Figure 2 is a system block diagram of the preferred embodiment of the present invention; and
Figure 3 is a waveform diagram of the preferred embodiment of the present invention.

### DETAILED DESCRIPTION OF THE PREFERRED EMBODIMENTS

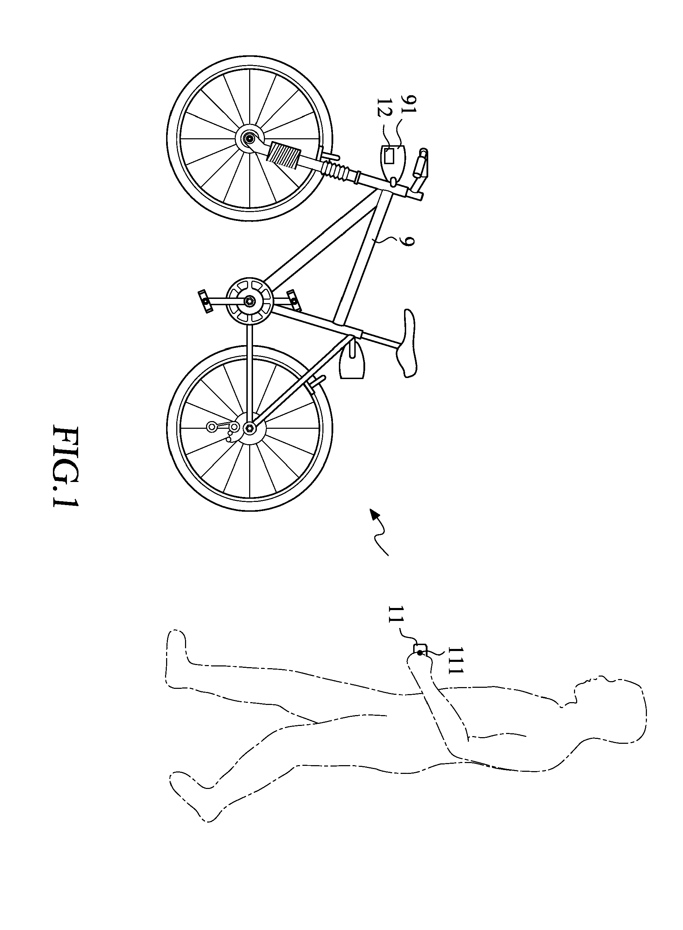

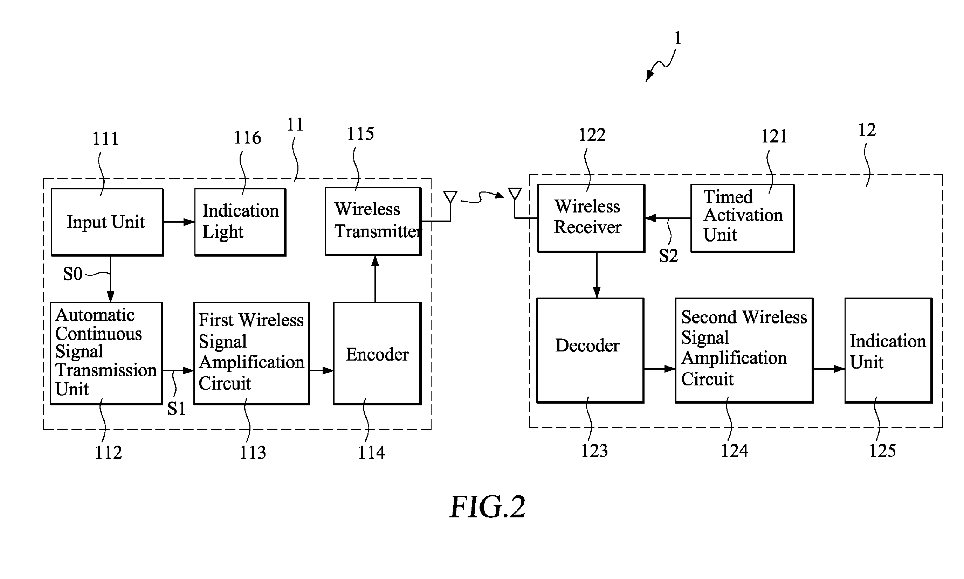

With reference to the drawings and in particular to Figures 1 and 2, Figure 1 is a schematic view illustrating the operation of a preferred embodiment of the present invention and Figure 2 is a system block diagram of the preferred embodiment of the present invention. As shown in these drawings, the present invention provides a remote control system for bicycle finding, generally designated at 1, which comprises: a bicycle finder 11 and a receiver unit 12. In the instant embodiment, the bicycle finder 11 is operated by a user and the receiver unit 12 mounted in a headlight 91 of a bicycle 9. The user operates the bicycle finder 11 to find and locate the bicycle 9.

As shown in Figure 2, the bicycle finder 11 comprises an input unit 111, an automatic continuous signal transmission unit 112, a first wireless signal amplification circuit 113, an encoder 114, a wireless transmitter 115, and an indication light 116. The input unit 111 is electrically connected to the automatic continuous signal transmission unit 112. The automatic continuous signal transmission unit 112 is electrically connected to the first wireless signal amplification circuit 113. The first wireless signal amplification circuit 113 is electrically connected to the encoder 114. The encoder is electrically connected to the wireless transmitter 115. The indication light 116 is electrically connected to the input unit 111. Preferably, the input unit 111 comprises physical pushbuttons or a touch screen.

The receiver unit 12 comprises a timed activation unit 121, a wireless receiver 122, a decoder 123, a second wireless signal amplification circuit 124, and an indication unit 125. The timed activation unit 121 is electrically connected to the wireless receiver 122. The wireless receiver 122 is electrically connected to the decoder 123. The decoder 123 is electrically connected to the second wireless signal amplification circuit 124. The second wireless signal amplification circuit 124 is electrically connected to the indication unit 125. Preferably, the indication unit 125 comprises an LED (Light-Emitting Diode) light.

The input unit 111 is operable by the user to transmit an instruction signal S0 to the automatic continuous signal transmission unit 112. The automatic continuous signal transmission unit 112, after receiving the instruction signal S0, issues a continuous signal S1 having a fixed time duration to the first wireless signal amplification circuit 113 and the continuous signal S1 is transmitted out through the encoder 114 and the wireless transmitter 115.

The feature of the present invention is that the timed activation unit 121 of the receiver unit 12 activates the wireless receiver 122 according to an activation period signal S2 that provides a time period of activation that is shorter than the fixed time duration in order to receive the continuous signal S1.

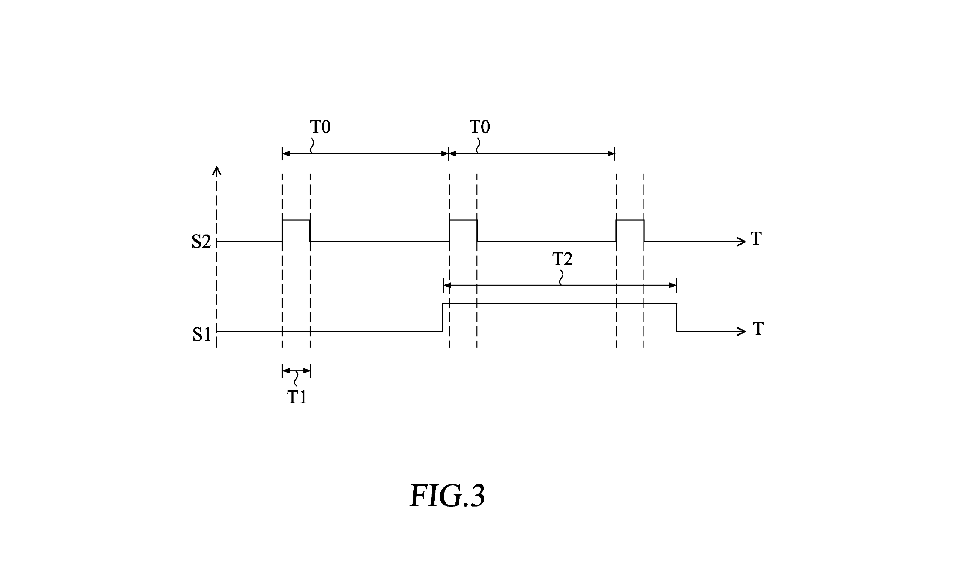

A more clear explanation of the present invention will be given with reference to a waveform diagram shown in Figure 3. As shown in the drawing, the timed activation unit 121 cyclically activates the wireless receiver 122 with a period T0 and in each period T0, the activated time interval is T1. The automatic continuous signal transmission unit 112 transmits the fixed duration continuous signals within a time period T2, and T2 is greater than T0. Since the activation period T0 with which the wireless receiver 122 is activated is smaller than the time period T2 of the continuous signal transmitted from the automatic continuous signal transmission unit 112, when a user operates the input unit 111 to transmit an instruction signal S0 to the automatic continuous signal transmission unit 112, the continuous signal S1 so transmitted must be long enough to cover a starting time point of the activation of the wireless receiver 122.

Since the receiver unit 12 is only activated by the timed activation unit 121 after each lapse of time interval T0 and since the activated time interval T1 is shorter than T0, compared to the known techniques that require the receiver device mounted to a bicycle to be always kept in a standby condition, the present invention only needs to get activated for a period of T1 within each time cycle of T0 so that the present invention is better for power saving performance.

## Claims

1. A remote control system (1) for bicycle finding, comprising:
a bicycle finder (11), which comprises an input unit (111), a first wireless signal amplification circuit (113), an encoder (114), and a wireless transmitter (115);
a receiver unit (12), which is adapted to mount to a bicycle (9), the receiver unit (12) comprising a wireless receiver (122), a decoder (123), a second wireless signal amplification circuit (124), and an indication unit (125);
**characterized in that**
the bicycle finder (11) comprises an automatic continuous signal transmission unit (112), which is electrically connected between the input unit (111) and the first wireless signal amplification circuit (113), the receiver unit (12) comprising a timed activation unit (121), which is electrically connected to the wireless receiver (122);
wherein the input unit (111) of the bicycle finder (11) is adapted to be operated by a user to transmit an instruction signal (S0) to the automatic continuous signal transmission unit (112), and the automatic continuous signal transmission unit (112), after receiving the instruction signal (S0),
issues a continuous signal (S1) of a fixed time duration (T2) to the first wireless signal amplification circuit (113), the continuous signal (S1) being then transmitted out through the encoder (114) and the wireless transmitter (115); and
wherein the timed activation unit (121) of the receiver unit (12) activates the wireless receiver (122) at an activation period (T0) that is shorter than the fixed time duration (T2) in order to receive the continuous signal (S1).

2. The remote control system for bicycle finding as claimed in Claim 1, wherein the bicycle finder (11) comprises an indication light (116), which is electrically connected to the input unit (111).

3. The remote control system for bicycle finding as claimed in Claim 1, wherein the input unit (111) comprises one of a physical pushbutton and a touch screen.

4. The remote control system for bicycle finding as claimed in Claim 1, wherein the indication unit (125) of the receiver unit (12) comprises an LED light.

5. The remote control system for bicycle finding as claimed in Claim 1, wherein the receiver unit (12) is mounted to a handlebar of the bicycle (9).
